# FASCICULE DE BREVET EUROPEEN

(11) **EP 3 345 838 B1**
(45) Date de publication et mention de la délivrance du brevet: **29.05.2019**
(21) Numéro de dépôt: 17207789.3
(22) Date de dépôt: 15.12.2017
(51) Int. Cl.: B64G 1/10, B64G 1/24

(54) **SYSTEME SPATIAL**
WELTRAUMSYSTEM
SPATIAL SYSTEM

(30) Priorité: 05.01.2017 FR 1700008
(43) Date de publication de la demande: 11.07.2018
(73) Titulaire: Thales, 92400 Courbevoie (FR)
(72) Inventeur: SAINCT, Hervé, 06110 LE CANNET (FR); COTE, Judith, 31000 TOULOUSE (FR)
(74) Mandataire: Brunelli, Gérald

(56) Documents cités:
- EP-A1- 1 669 291
- WO-A1-2012/040828
- US-A1- 2003 155 468
- US-B1- 6 764 049

## Description

L'invention porte sur le domaine des systèmes spatiaux, et plus particulièrement sur les systèmes spatiaux à couverture permanente d'une surface déterminée de la Terre.

Il est bien connu des systèmes d'observation géostationnaires d'une part, et polaires d'autre part, de façon entièrement séparée, i.e. ayant des orbites séparées et des zones d'observation au sol distinctes.

Les systèmes géostationnaires sont parfaitement connus, de même que les systèmes polaires, ces derniers notamment par les orbites utilisées, dont les noms classiques sont connus, tels les orbites Molniya ou les orbites Toundra.

Il est également connu d'autres orbites distinctes des deux types géostationnaire et polaire, comme citées dans la demande de brevet internationale WO 2012/040828 A1 mais qui ne concerne que les zones de latitudes supérieure à 60°, ou les systèmes uniquement polaires comme les orbites dites Triple Apogee, d'acronyme TAP pour "Three APogees" en langue anglaise, décrites dans " Three-Apogee 16-h Highly Elliptical Orbit as Optimal Choice for Continuous Meteorological Imaging of Polar Régions", de Trischenko & al, Journal of the American Meteorological society, Nov 2011.

Il existe également le document FR 2291299 A1 qui décrit un système spatial comprenant au moins un satellite décrivant une orbite elliptique héliosynchrone rétrograde autour de la Terre.

Tous ces systèmes spatiaux ont un coût très élevé, ce que l'on peut constater par le fait qu'aucun pays isolé n'a pu à ce jour déployer seul de système propre sur de telles orbites à couverture permanente, par exemple météorologique, comme au Canada où le projet PCW attend depuis 10 ans faute de budget...

Un but de l'invention est de pouvoir limiter le coût d'un service continu, et de pouvoir le partager sur une région correspondant à plusieurs pays.

Un autre but de l'invention est de respecter au maximum la compatibilité avec les éléments existants, à la fois pour le matériel des satellites et instruments embarqués (pour bénéficier de la récurrence ou économie due à la fabrication en série, à la réutilisation de matériels déjà validés pour l'environnement spatial) que pour les lancements (l'orbite préconisée doit être compatible des lanceurs actuels et notamment les moins chers/puissants parmi eux; une orbite inaccessible à ces derniers serait inutile).

Il est proposé, selon un aspect de l'invention, un système spatial comprenant :
- deux satellites principaux décrivant chacun une orbite distincte elliptique autour de la Terre, chacune des deux orbites vérifiant les caractéristiques suivantes :
   - l'inclinaison du plan de l'orbite par rapport au plan équatorial est comprise entre 55° et 65° ;
   - l'excentricité de l'orbite est comprise entre 0,2 et 0,3 ;
   - le demi grand axe de l'orbite est fixé de manière à obtenir une orbite géosynchrone ;
   - l'argument du périgée est compris entre 240° et 265° ou entre 275° et 300° pour la couverture d'une zone de latitude supérieure à au moins 55° (calotte Pôle Nord) combinée à une zone additionnelle de latitudes inférieures à au plus 55° et de longitudes comprises dans un intervalle de valeurs de longueur inférieure à un premier seuil; ou compris entre 60° et 85° ou entre 95° et 120° pour la couverture d'une zone de latitude inférieure à au plus -55° (calotte Pôle Sud) combinée à une zone additionnelle de latitudes supérieures à au moins -55° et de longitudes comprises dans un intervalle de valeurs de longueur inférieure à un deuxième seuil ;
   - la longitude du noeud ascendant est définie en fonction de la zone additionnelle, de sorte qu'elle soit comprise dans un intervalle de valeurs centré sur la longitude moyenne de la zone additionnelle et de longueur inférieure à 80° ; et
   - les deux satellites principaux ayant une différence d'ascension droite du noeud ascendant de 180° et avec une différence d'anomalie vraie de 180° ; et
- au moins une station terrestre configurée pour échanger des données avec au moins un desdits satellites principaux.

Un tel système spatial permet de fournir un service permanent ou en continu sur au maximum une zone terrestre comprenant une calotte polaire ainsi qu'une région de latitude différente sur un intervalle de longitudes pouvant correspondre à plusieurs pays voulant partager les coûts d'un tel service, tel un service météorologique, de géolocalisation, de télécommunication de toute sorte (émissions TV, accès internet, radio, téléphonie...), ou d'imagerie de toute sorte (pour observation, détection/alerte, suivi d'évolutions court et long terme...).

Dans un mode de réalisation, le premier seuil est de 90° lorsque la zone additionnelle a une latitude minimale comprise entre 10 ° et 30°.

Ainsi, la couverture permanente obtenue, outre la calotte Pôle Nord, permet de servir un ou plusieurs pays additionnels situés jusqu'à une latitude très basse en valeur positive, quasi équatoriale.

Selon un mode de réalisation, le premier seuil est de 150° lorsque la zone additionnelle a une latitude minimale comprise entre 30° et 50°.

Ainsi, une large couverture, de dimension continentale (ou plus grande qu'un seul pays) est obtenue dans l'hémisphère nord en sus de la calotte Pôle Nord. Ceci permet de fournir un service continu à la fois aux pays nordiques et à un ensemble continental tel que par exemple l'Europe ou le Moyen-Orient.

Dans un mode de réalisation, le deuxième seuil est de 90° lorsque la zone additionnelle (2) a une latitude minimale comprise entre -30° et -10°.

Ainsi, la couverture permanente obtenue, outre la calotte Pôle Sud, permet de servir un ou plusieurs pays additionnels situés jusqu'à une latitude très haute en valeur négative, quasi équatoriale.

Selon un mode de réalisation, le deuxième seuil est de 150° lorsque la zone additionnelle (2) a une latitude minimale comprise entre -50° et -30°.

Ainsi, une large couverture, de dimension continentale (ou plus grande qu'un seul pays) est obtenue dans l'hémisphère sud en sus de la calotte Pôle Sud. Ceci permet de fournir un service continu à la fois à des utilisateurs situés dans la région polaire et à un ensemble continental tel que par exemple l'Australie.

Dans un mode de réalisation, l'inclinaison du plan de l'orbite par rapport au plan équatorial est comprise entre 60° et 65°.

Ainsi, l'inclinaison peut être choisie pour ajuster précisément la zone de couverture permanente tout en restant voisine des orbites résonantes par rapport aux attractions terrestre et lunisolaire: ce voisinage permet une économie importante de carburant de maintien à poste au cours de la durée de vie des satellites, et l'ajustement permet d'améliorer encore la zone de couverture si nécessaire. De plus, cette inclinaison permet un bon compromis entre la couverture des zones polaires, favorisée par une inclinaison élevée, et celle des zones à basse latitude favorisée par une inclinaison faible.

Selon un mode de réalisation, l'inclinaison du plan de l'orbite par rapport au plan équatorial est de 63,5°.

Ainsi, cette valeur est exactement celle de l'orbite résonante précédemment décrite permettant le maximum d'économie de carburant pour le maintien à poste (ou bien encore, la durée de mission la plus longue pour des satellites dotés d'une quantité de carburant fixée).

Dans un mode de réalisation, l'excentricité de l'orbite est de 0,25.

Ainsi, cette excentricité permet d'obtenir la forme voulue pour la couverture permanente au sol tout en respectant le critère de lançabilité, c'est-à-dire que l'orbite obtenue est accessible via un lanceur existant donné complémenté des moyens propres de delta-V embarqués dans le satellite. Selon la capacité disponible pour les lanceurs au moment du contrat et la forme désirée pour la couverture permanente, ce paramètre d'excentricité peut varier.

Selon un mode de réalisation, l'argument du périgée est compris entre 280° et 290° pour la couverture d'une zone de latitude supérieure à 55° (calotte Pôle Nord) combinée à une zone additionnelle de latitudes inférieures à 55° et de longitudes comprises dans un intervalle de valeurs de longueur inférieure au premier seuil.

Ainsi, la zone de couverture permanente obtenue par le système de satellites privilégie la calotte Pôle Nord, mais elle comporte aussi un territoire situé plus bas vers les basses latitudes couvrant une large zone de longitudes.

Dans un mode de réalisation, l'argument du périgée est compris entre 275° et 285° pour la couverture d'une zone de latitude supérieure à 55° (calotte Pôle Nord) combinée à une zone additionnelle de latitudes inférieures à 55° et de longitudes comprises dans un intervalle de valeurs de longueur inférieure au premier seuil.

Ainsi, la zone de couverture permanente obtenue par le système de satellites comporte un territoire situé plus haut en latitudes que dans le cas précédent tout en y couvrant une zone de longitudes plus large.

Selon un mode de réalisation, l'argument du périgée est compris entre 280° et 300°, pour la couverture d'une zone de latitude supérieure à 55° (calotte Pôle Nord) combinée à une zone additionnelle de latitudes inférieures à 55° et de longitudes comprises dans un intervalle de valeurs de longueur inférieure au premier seuil.

Ainsi, la zone de couverture permanente obtenue par le système de satellites comporte un territoire situé plus bas en latitudes que dans le cas précédent tout en y couvrant une zone de longitudes plus étroite.

Dans un mode de réalisation, le système comprend au moins un satellite additionnel en redondance d'un satellite principal, placé sur l'orbite du satellite principal correspondant, avec un décalage en anomalie entre le satellite additionnel et le satellite principal correspondant.

Ainsi, la fiabilité du système et la disponibilité opérationnelle du service sont améliorées, la redondance en vol garantissant l'absence d'interruption du service même en cas de panne complète d'un des satellites.

Selon un mode de réalisation, le système comprend au moins un satellite additionnel placé sur orbite elliptique autour de la Terre, distincte des deux orbites des deux satellites principaux mais vérifiant lesdites mêmes caractéristiques, l'écart entre deux satellites du système étant tel que leur écart d'ascension droite du noeud ascendant et leur écart en anomalie vraie sont de 360° divisé par le nombre de satellites principaux du système orbital.

Ainsi, la zone couverte en permanence peut être agrandie. De la même façon, une seconde paire de satellites peut être installée, simultanément ou plus tard, pour obtenir une large extension de la couverture permanente.

L'invention sera mieux comprise à l'étude de quelques modes de réalisation décrits à titre d'exemples nullement limitatifs et illustrés par les dessins annexés sur lesquels :
- la figure 1 illustre schématiquement une couverture permanente de la calotte Pôle Nord pour un service, selon l'état de l'art ;
- la figure 2 illustre schématiquement une zone additionnelle contigüe à la calotte Pôle Nord de la figure 1, selon un aspect de l'invention ;
- la figure 3 illustre schématiquement une zone comprenant la réunion des calotte Pôle Nord de la figure 1 et de la zone additionnelle de la figure 2 ;
- les figures 4 et 5 illustrent schématiquement les orbites, selon un aspect de l'invention ;
- la figure 6 représente la même trace au sol des satellites, ainsi que leurs courbes respectives d'iso-élévations possibles à un instant donné, selon un aspect de l'invention ; et
- la figure 7 représente, à titre d'illustration, les régions terrestres couvertes en permanence par l'un au moins des satellites avec une élévation minimale choisie à 27°, selon un aspect de l'invention.

Sur les différentes figures, les éléments ayant des références identiques sont identiques.

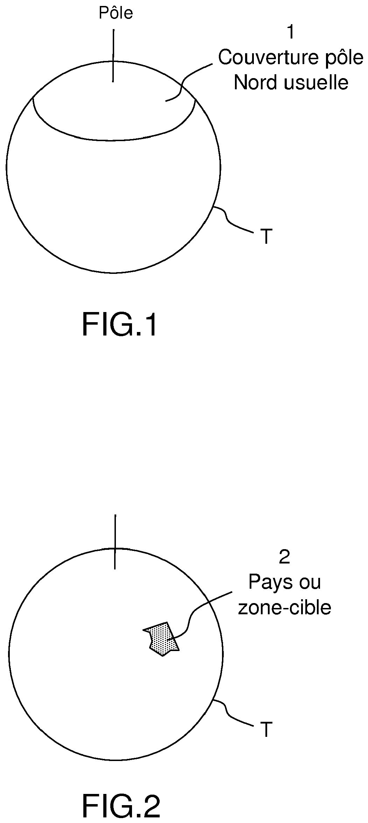

La figure 1 illustre schématiquement une couverture permanente de la calotte Pôle Nord 1 pour un service par exemple par un système traditionnel embarqué sur des orbites de type i=90°, ou Molniya ou Toundra, et ne se préoccupant que du service polaire.

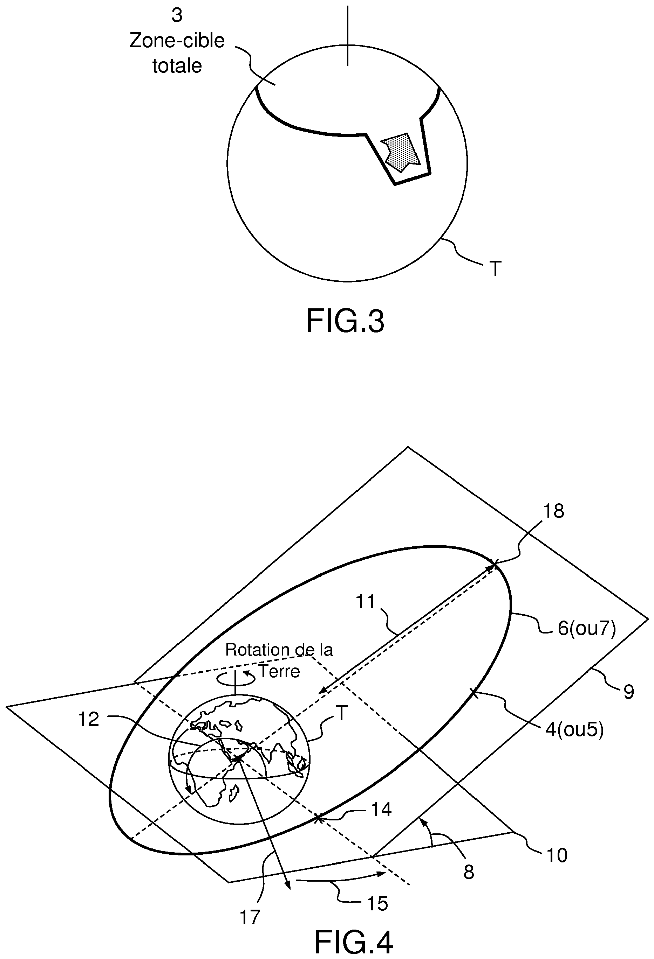

La figure 2 illustre schématiquement une zone additionnelle 2 contigüe à la calotte Pôle Nord de la figure 1, et la figure 3 illustre schématiquement une zone 3 comprenant la réunion de la calotte Pôle Nord de la figure 1 et de la zone additionnelle de la figure 2.

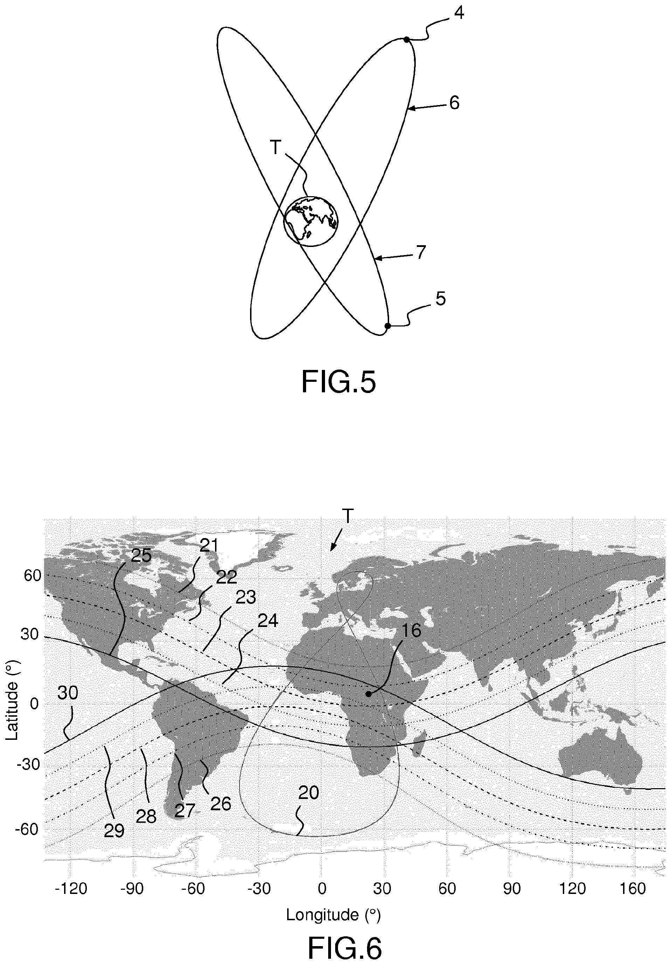

Il est proposé, comme illustré sur les figures 4 et 5, de manière non limitative un système spatial comprenant
- deux satellites principaux 4, 5 décrivant chacun une orbite distincte 6, 7 elliptique autour de la Terre T, chacune des deux orbites 6, 7 vérifiant les caractéristiques suivantes :
   - l'inclinaison 8 du plan 9 de l'orbite 6, 7 par rapport au plan équatorial 10 est comprise entre 55° et 65° ;
   - l'excentricité de l'orbite 6, 7 est comprise entre 0,2 et 0,3 ;
   - le demi grand axe 11 de l'orbite 6, 7 est fixé de manière à obtenir une orbite géosynchrone 6, 7 ;
   - l'argument 12 du périgée 13 est compris entre 240° et 265° ou entre 275° et 300° pour la couverture 3 d'une zone 1 de latitude supérieure à 55° combinée à une zone additionnelle 2 de latitudes inférieures à 55° et de longitudes comprises dans un intervalle de valeurs de longueur inférieure à un premier seuil; ou compris entre 60° et 85° ou entre 95° et 120° pour la couverture 3 d'une zone 1 de latitude inférieure à -55° combinée à une zone additionnelle 2 de latitudes supérieures à -55° et de longitudes comprises dans un intervalle de valeurs de longueur inférieure à un deuxième seuil ;
   - la longitude du noeud ascendant 14 est définie en fonction de la zone additionnelle 2, de sorte qu'elle soit comprise dans un intervalle de valeurs centré sur la longitude moyenne de la zone additionnelle et de 60° de longueur ;
   - les deux satellites principaux 4, 5 ayant une différence d'ascension droite 15 du noeud ascendant 14 de 180° et avec une différence d'anomalie vraie 15 de 180° ; et
- au moins une station terrestre 16 configurée pour échanger des données avec au moins un desdits satellites principaux 4, 5.

La figure 4 représente l'une des deux orbites 6 ou 7 d'un des satellites principaux 4 ou 5.

L'ascension droite 15 du noeud ascendant 14 est calculée par rapport à une référence 17 qui est la valeur moyenne des longitudes de la zone additionnelle 2, pour couvrir au mieux cette zone additionnelle 2.

Le système satellitaire de l'invention, non géostationnaire, permet d'assurer la meilleure couverture permanente sur la zone 3 constituée par un ensemble de pays, ou lieux géographiques nommés cibles 2 et une calotte pôlaire1.

La notion de "meilleure couverture" est liée à un ensemble de critères à ranger par ordre d'importance selon la mission (les services) envisagée. Ces critères peuvent comprendre :
- la permanence d'observation (au moins l'un des satellites 4, 5 du système est toujours visible depuis les cibles, ou bien visible durant une longue durée par jour, que l'on cherche à augmenter) ;
- l'élévation locale sous laquelle au moins une partie des points d'une cible 2 sont observés; par exemple l'observation météorologique n'accepte typiquement que des points observés sous une élévation supérieure à environ 20°, tandis qu'un service de télécommunication radio accepte typiquement des élévations jusqu'à deux fois plus faibles ;
- la distance d'observation (moyenne pour l'ensemble des points d'une cible, ou pour un point clé donné, ou pour la trace subsatellite), ceci pouvant également s'exprimer en termes de "taille du pixel observé au sol" ;
- l'étendue maximale de la zone additionnelle 2 couverte au voisinage d'une cible donnée (par exemple, en météorologie ou en observation de la Terre, un pays donné peut souhaiter observer mille kilomètres au-delà de ses frontières) ;
- la position possible de la ou les stations au sol 16 de réception et de contrôle, commandant la capacité de réception en temps réel ("permanence") ;
- la capacité des lanceurs spatiaux à déployer le système, notamment la masse maximale qu'un lanceur donné peut déposer en orbite finale ou de transfert contraint la taille des satellites utilisables, et réciproquement, si on souhaite réemployer un type de satellite existant, sa masse contraint l'étendue des orbites possibles, en limitant par exemple l'apogée 18 ou l'inclinaison 8 ;
- la maîtrise des conditions d'environnement radiatif, avec par exemple l'objectif de limiter la durée de présence des satellites 4, 5 dans les ceintures de Van Allen ; et
- la durée de vie, par le coût de maintien à poste en consommables.

On entend par taille de pixel la surface au Sol représentée par un pixel de l'image satellitaire, ou la dimension moyenne de cette surface.

Le premier seuil peut être de 90° lorsque la zone additionnelle a une latitude minimale comprise entre 10° et 30°, ou de 150° lorsque la zone additionnelle a une latitude minimale comprise entre 30° et 50°.

L'inclinaison du plan de l'orbite par rapport au plan équatorial peut être comprise entre 60° et 65°, et par exemple de 63,5°, et l'excentricité de l'orbite peut être de 0,25.

L'argument 12 du périgée 13 peut être compris entre 280° et 290° pour la couverture d'une zone 1 de latitude supérieure à 55° combinée à une zone additionnelle 2 de latitudes inférieures à 55° et de longitudes comprises dans un intervalle de valeurs de longueur inférieure au premier seuil, ou compris entre 275° et 285° pour la couverture d'une zone 1 de latitude supérieure à 55° combinée à une zone additionnelle 2 de latitudes inférieures à 55° et de longitudes comprises dans un intervalle de valeurs de longueur inférieure au premier seuil, ou compris entre 280° et 300°, pour la couverture d'une zone 1 de latitude supérieure à 55° combinée à une zone additionnelle 2 de latitudes inférieures à 55° et de longitudes comprises dans un intervalle de valeurs de longueur inférieure au premier seuil.

Le système spatial peut comprendre au moins un satellite additionnel en redondance d'un satellite principal 4, 5, placé sur l'orbite du satellite principal correspondant, avec un faible décalage en anomalie entre le satellite additionnel et le satellite principal correspondant.

Le système spatial peut comprendre au moins un satellite additionnel placé sur orbite elliptique autour de la Terre, distincte des deux orbites des deux satellites principaux mais vérifiant les mêmes caractéristiques, l'écart entre deux satellites du système étant tel que leur écart d'ascension droite du noeud ascendant et leur écart en anomalie vraie sont de 360° divisé par le nombre de satellites principaux du système orbital.

Un exemple particulier consiste à rechercher une constellation d'observation météorologique couvrant les pays nordiques de l'Europe, mais incorporant également un autre pays-cible plus proche de l'équateur, de façon à fournir au prix d'un seul système le service demandé à plus de pays investisseurs.

On rechercher la meilleure solution pour :
- une application météorologique à élévation minimale de 20°,
- couvrant tous les pays arctiques européens de façon permanente,
- s'étendant également en permanence sur une zone géographique centrée sur le Moyen-Orient,
- s'étendant autant que possible également vers le Canada, qui est intégralement couvert mais possiblement pas en permanence avec une élévation supérieure à 20° pour certaines régions, et
- respectant finalement les autres contraintes : lancement possible pour des satellites semblables aux satellites Météosats existant en système géostationnaire, de taille de pixel raisonnablement proche de la performance habituelle en géostationnaire, environnement radiatif proche de celui en géostationnaire.

Un point de départ typique est choisi sur des critères économiques: on considère pour démarrer ce cas que le système satellitaire a des points communs avec celui utilisé pour couvrir uniquement la zone des pays nordiques, à savoir un ensemble minimal de deux satellites sur deux orbites, dont un exemple connu est l'orbite Tundra de 24h ainsi que les systèmes " habituels" d'observation géostationnaire.

On part d'une orbite de période 24h. Pour assurer la couverture des zones plus au nord, on augmente l'inclinaison (et donc on a besoin de deux satellites pour continuer la permanence sur le pays d'intérêt).

Pour couvrir un pôle en permanence, il faut passer sur une orbite elliptique et favoriser un hémisphère, en l'espèce le Pôle Nord, et donc prendre une position de l'apogée d'environ 270°.

Le plan orbital d'un satellite est déterminé approximativement de sorte qu'il traverse géométriquement l'ensemble des pays cibles, et est ajusté de sorte que, lors du passage d'un satellite, le point subsatellite se trouve dans ou aussi proche que possible d'un pays-cible. On entend par point subsatellite, l'intersection entre la surface de la Terre et la droite reliant le satellite au centre de la Terre.

Dans cet exemple, on détermine une longitude du noeud ascendant de 25°, comme illustré sur la figure 6 où il est clairement illustré que lors du mouvement du satellite, le point subsatellite traverse successivement l'ouest de Moyen-Orient jusqu'aux pays au Nord de l'Europe, sur la courbe 20.

Enfin pour minimiser les dérives de l'apogée au cours du temps on maintient l'inclinaison à la valeur critique de 63,5°, valeur classique sur les orbites terrestres hautes ou HEO pour acronyme de "Highly Eccentric Orbit" en langue anglaise.

On peut ajuster le demi-grand axe à environ 42000 km et l'excentricité à 0,25 (période 24h), de façon à privilégier un défilement des satellites aux alentours de l'apogée sur toute la zone-cible et à maximiser la couverture de ces zones.

L'ajustement du décalage des périgées/apogées est déterminé de façon que les apogées se trouvent aux alentours du barycentre des zones-cibles, ce qui permet d'améliorer la couverture du nord de l'Europe, tout en conservant une bonne couverture du pays d'intérêt.

L'espacement des deux satellites de 180° en anomalie, en vérifiant que les masses/volumes de Météosats typiques sont compatibles de lancements Falcon 9 typiques vers ce genre d'orbites.

En cas de redondance des satellites, des lancements doubles peuvent être réalisés.

L'orbite intermédiaire de transfert est définie par le minimum permettant au satellite de continuer par ses propres moyens.

Sur ce dernier point il est à remarquer qu'il est alors possible d'utiliser la capacité typique de circularisation prévue dans un satellite de type géostationnaire, de façon à pouvoir réutiliser tel quel un design existant (Météosats géostationnaires) pour définir les orbites de transfert possibles.

En d'autres termes, dans cette option, il est demandé aux lanceurs des caractéristiques d'orbites de transfert telles qu'avec le delta-V de circularisation géostationnaire (typiquement 1500 m/s) il soit possible d'atteindre l'orbite finale définie précédemment, soit en modifiant les altitudes d'apogée et périgée, soit en corrigeant l'inclinaison du plan orbital, soit en combinant ces deux actions.

La courbe 20 de la figure 6, en forme de 8 déformée non symétrique représente la trace au sol du satellite, c'est-à-dire l'ensemble des points sous-satellite ou subsatellite au cours d'une orbite. Les orbites des deux satellites principaux 4, 5 sont choisies de sorte qu'ils aient la même trace au sol 20 afin de garantir la permanence et la répétitivité de la couverture.

Les lignes de niveau 21, 22, 23, 24, 25 et 26, 27, 28, 29 30 représentent respectivement les courbes d'iso-élévation minimale, c'est-à-dire de l'angle sous lequel chacun des satellites 4, 5 est vu depuis le sol. Pour fournir des produits d'une qualité suffisante et exploitables par les utilisateurs finals, cette élévation doit être toujours supérieure à une valeur nominale, qui dépend du service à fournir, typiquement de l'ordre de 10° ou plus pour des télécommunications, ou de 20° et plus pour de l'imagerie météorologique (cette valeur est par exemple estimée à au moins 27° pour les services météorologiques européens).

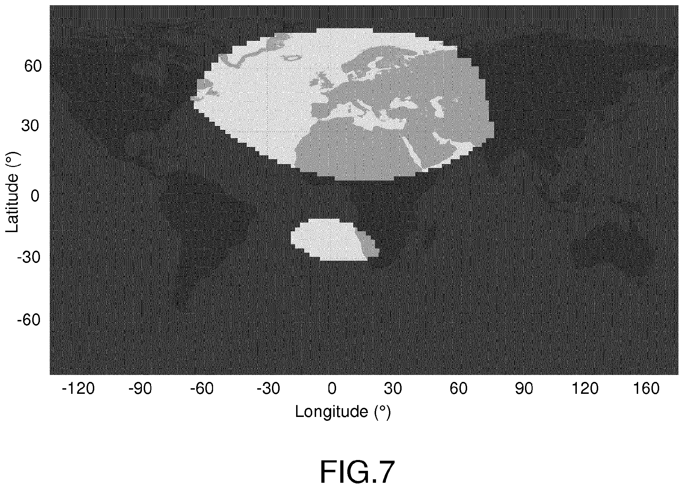

La figure 7 illustre schématiquement les régions terrestres couvertes en permanence par l'un au moins des satellites avec une élévation minimale choisie à 27°, selon un aspect de l'invention.

## Revendications

1. Système spatial comprenant :
- deux satellites principaux (4,5) décrivant chacun une orbite distincte (6, 7) elliptique autour de la Terre (T) et au moins une station terrestre (16) configurée pour échanger des données avec au moins un desdits satellites principaux (4, 5), chacune des deux orbites vérifiant les caractéristiques suivantes :
- l'inclinaison (8) du plan (9) de l'orbite par rapport au plan équatorial (10) est comprise entre 55° et 65° ;
- l'excentricité de l'orbite est comprise entre 0,2 et 0,3 ;
- le demi grand axe (11) de l'orbite est fixé de manière à obtenir une orbite géosynchrone; et
- les deux satellites principaux ayant une différence d'ascension droite (15) du noeud ascendant (14) de 180° et avec une différence d'anomalie vraie de 180° ;
- le système étant **caractérisé en ce que** les deux orbites vérifient les caractéristiques suivantes :
- l'argument (12) du périgée (13) est compris entre 240° et 265° ou entre 275° et 300° pour la couverture d'une zone (1) de latitude supérieure à au moins 55° combinée à une zone additionnelle (2) de latitudes inférieures à au plus 55° et de longitudes comprises dans un intervalle de valeurs de longueur inférieure à un premier seuil; ou compris entre 60° et 85° ou entre 95° et 120° pour la couverture d'une zone (1) de latitude inférieure à au plus -55° combinée à une zone additionnelle (2) de latitudes supérieures à au moins -55° et de longitudes comprises dans un intervalle de valeurs de longueur inférieure à un deuxième seuil ; et
- la longitude du noeud ascendant est définie en fonction de la zone additionnelle (2), de sorte qu'elle soit comprise dans un intervalle de valeurs centré sur la longitude moyenne de la zone additionnelle et de longueur inférieure à 80°.

2. Système spatial selon la revendication 1, dans lequel le premier seuil est de 90° lorsque la zone additionnelle (2) a une latitude minimale comprise entre 10° et 30°.

3. Système spatial selon la revendication 1 ou 2, dans lequel le premier seuil est de 150° lorsque la zone additionnelle (2) a une latitude minimale comprise entre 30° et 50°.

4. Système spatial selon la revendication 1, dans lequel le deuxième seuil est de 90° lorsque la zone additionnelle (2) a une latitude minimale comprise entre -30° et - 10°.

5. Système spatial selon la revendication 1 ou 2, dans lequel le deuxième seuil est de 150° lorsque la zone additionnelle (2) a une latitude minimale comprise entre -50° et - 30°.

6. Système spatial selon l'une des revendications précédentes, dans lequel l'inclinaison (8) du plan (9) de l'orbite par rapport au plan équatorial (10) est comprise entre 60° et 65°.

7. Système spatial selon l'une des revendications précédentes, dans lequel l'inclinaison (8) du plan (9) de l'orbite par rapport au plan équatorial (10) est de 63,5°.

8. Système spatial selon l'une des revendications précédentes, dans lequel l'excentricité de l'orbite est de 0,25.

9. Système spatial selon l'une des revendications 1 à 8, dans lequel l'argument (12) du périgée (13) est compris entre 280° et 290° pour la couverture d'une zone (1) de latitude supérieure à 55° combinée à une zone additionnelle (2) de latitudes inférieures à 55° et de longitudes comprises dans un intervalle de valeurs de longueur inférieure au premier seuil.

10. Système spatial selon l'une des revendications 1 à 8, dans lequel l'argument (12) du périgée (13) est compris entre 275° et 285° pour la couverture d'une zone (1) de latitude supérieure à 55° combinée à une zone additionnelle (2) de latitudes inférieures à 55° et de longitudes comprises dans un intervalle de valeurs de longueur inférieure au premier seuil.

11. Système spatial selon l'une des revendications 1 à 8, dans lequel l'argument (12) du périgée (13) est compris entre 280° et 300°, pour la couverture d'une zone (1) de latitude supérieure à 55° combinée à une zone additionnelle (2) de latitudes inférieures à 55° et de longitudes comprises dans un intervalle de valeurs de longueur inférieure au premier seuil.

12. Système spatial selon l'une des revendications précédentes, comprenant au moins un satellite additionnel en redondance d'un satellite principal (4, 5), placé sur l'orbite du satellite principal correspondant (6, 7), avec un décalage en anomalie entre le satellite additionnel et le satellite principal correspondant (4, 5).

13. Système spatial selon l'une des revendications précédentes, comprenant au moins un satellite additionnel placé sur orbite elliptique autour de la Terre (T), distincte des deux orbites (6, 7) des deux satellites principaux (4, 5) mais vérifiant lesdites mêmes caractéristiques, l'écart entre deux satellites du système étant tel que leur écart d'ascension droite (15) du noeud ascendant (14) et leur écart en anomalie vraie sont de 360° divisé par le nombre de satellites principaux du système orbital.

## Patentansprüche

1. Raumsystem, Folgendes beinhaltend:
- zwei Hauptsatelliten (4, 5), welche jeweils eine unterschiedliche elliptische Umlaufbahn (6, 7) um die Erde (T) beschreiben und mindestens eine Bodenstation (16), welche konfiguriert ist, um Daten mit mindestens einem der Hauptsatelliten (4, 5) auszutauschen, wobei jede der beiden Umlaufbahnen die folgenden Merkmale verifiziert:
- die Neigung (8) der Ebene (9) der Umlaufban in Bezug auf die Äquatorialebene (10) beträgt zwischen 55° und 65°;
- die Exzentrizität der Umlaufbahn beträgt zwischen 0,2 und 0,3;
- die große Halbachse (11) der Umlaufbahn ist so festgelegt, dass eine geosynchrone Umlaufbahn erzielt wird; und
- die beiden Hauptsatelliten besitzen eine Rektaszensions-Differenz (15) des aufsteigenden Knotens (14) von 180° und mit einer Differenz der wahren Anomalie von 180°;
- wobei das System **dadurch gekennzeichnet ist, dass** die beiden Umlaufbahnen folgende Merkmale verifizieren:
- das Argument (12) des Perigäums (13) beträgt zwischen 240° und 265° oder zwischen 275° und 300° für die Abdeckung einer Zone (1) mit einer Breite von über mindestens 55° in Kombination mit einer Zusatzzone (2) von Breiten unter maximal 55° und Längen in einem Intervall von Längenwerten, welche einen ersten Schwellenwert unterschreiten; oder es beträgt zwischen 60° und 85° oder zwischen 95° und 120° für die Abdeckung einer Zone (1) mit einer Breite von unter mindestens -55° in Kombination mit einer Zusatzzone (2) von Breiten über maximal -55° und Längen in einem Intervall von Längenwerten, welche einen zweiten Schwellenwert unterschreiten; und
- die Länge des aufsteigenden Knotens wird anhand der Zusatzzone (2) in der Weise definiert, dass sie in einem Werteintervall liegt, welcher auf die mittlere Länge der Zusatzzone zentriert ist, und eine Länge unter 80° besitzt.

2. Raumsystem nach Anspruch 1, bei welchem der erste Schwellenwert 90° beträgt, wenn die Zusatzzone (2) eine Mindestbreite zwischen 10° und 30° besitzt.

3. Raumsystem nach Anspruch 1 oder 2, bei welchem der erste Schwellenwert 150° beträgt, wenn die Zusatzzone (2) eine Mindestbreite zwischen 30° und 50° besitzt.

4. Raumsystem nach Anspruch 1, bei welchem der zweite Schwellenwert 90° beträgt, wenn die Zusatzzone (2) eine Mindestbreite zwischen -30° und -10° besitzt.

5. Raumsystem nach Anspruch 1 oder 2, bei welchem der zweite Schwellenwert 150° beträgt, wenn die Zusatzzone (2) eine Mindestbreite zwischen -50° und -30° besitzt.

6. Raumsystem nach einem der vorhergehenden Ansprüche, bei welchem die Neigung (8) der Ebene (9) der Umlaufban in Bezug auf die Äquatorialebene (10) zwischen 60° und 65° beträgt.

7. Raumsystem nach einem der vorhergehenden Ansprüche, bei welchem die Neigung (8) der Ebene (9) der Umlaufban in Bezug auf die Äquatorialebene (10) 63,5° beträgt.

8. Raumsystem nach einem der vorhergehenden Ansprüche, bei welchem die Exzentrizität der Umlaufbahn 0,25 beträgt.

9. Raumsystem nach einem der Ansprüche 1 bis 8, bei welchem das Argument (12) des Perigäums (13) zwischen 280° und 290° für die Abdeckung einer Zone (1) mit einer Breite über 55° in Kombination mit einer Zusatzzone (2) von Breiten unter 55° und Längen in einem Intervall von Längenwerten, welche den ersten Schwellenwert unterschreiten, beträgt.

10. Raumsystem nach einem der Ansprüche 1 bis 8, bei welchem das Argument (12) des Perigäums (13) zwischen 275° und 285° für die Abdeckung einer Zone (1) mit einer Breite über 55° in Kombination mit einer Zusatzzone (2) von Breiten unter 55° und Längen in einem Intervall von Längenwerten, welche den ersten Schwellenwert unterschreiten, beträgt.

11. Raumsystem nach einem der Ansprüche 1 bis 8, bei welchem das Argument (12) des Perigäums (13) zwischen 280° und 300° für die Abdeckung einer Zone (1) mit einer Breite über 55° in Kombination mit einer Zusatzzone (2) von Breiten unter 55° und Längen in einem Intervall von Längenwerten, welche den ersten Schwellenwert unterschreiten, beträgt.

12. Raumsystem nach einem der vorhergehenden Ansprüche, welches mindestens einen zusätzlichen redundanten Satelliten eines Hauptsatelliten (4, 5) beinhaltet, welcher auf der Umlaufbahn des entsprechenden Hauptsatelliten (6, 7) mit einer Verschiebung in Bezug auf die Anomalie zwischen dem Zusatzsatelliten und dem entsprechenden Hauptsatelliten (4, 5) platziert ist.

13. Raumsystem nach einem der vorhergehenden Ansprüche, welches mindestens einen Zusatzsatelliten beinhaltet, welcher auf einer elliptischen Umlaufbahn um die Erde (T) platziert ist, welche sich von den beiden Umlaufbahnen (6, 7) der beiden Hauptsatelliten (4, 5) unterscheidet, welche jedoch dieselben Merkmale verifiziert, wobei der Abstand zwischen zwei Satelliten des Systems so gestaltet ist, dass ihre Rektaszensions-Abweichung (15) des aufsteigenden Knotens (14) und ihre Abweichung in Bezug auf die wahre Anomalie 360°, geteilt durch die Anzahl der Hauptsatelliten des Umlaufbahnsystems, beträgt.

## Claims

1. A space system comprising:
- two main satellites (4, 5) each describing a distinct elliptical orbit (6, 7) around the Earth (T) and at least one earth station (16) configured to exchange data with at least one of said main satellites (4, 5), each of the two orbits verifying the following characteristics:
- the inclination (8) of the plane (9) of the orbit in relation to the equatorial plane (10) lies between 55° and 65°;
- the eccentricity of the orbit lies between 0.2 and 0.3;
- the major half-axis (11) of the orbit is set so as to obtain a geosynchronous orbit; and
- the two main satellites having a right ascension difference (15) of the ascending node (14) of 180° and with a true anomaly difference of 180°;
- the system being **characterized in that** the two orbits verify the following characteristics:
- the argument (12) of the perigee (13) lies between 240° and 265° or between 275° and 300° for the coverage of a zone (1) of latitude above at least 55° combined with an additional zone (2) of latitudes below at most 55° and of longitudes lying within an interval of values having a length below a first threshold; or lies between 60° and 85° or between 95° and 120° for the coverage of a zone (1) of latitude below at most -55° combined with an additional zone (2) of latitudes above at least -55° and of longitudes lying within an interval of values having a length below a second threshold; and
- the longitude of the ascending node is defined as a function of the additional zone (2), such that it lies within an interval of values centred on the average longitude of the additional zone and having a length less than 80°.

2. The space system according to claim 1, wherein the first threshold is 90° when the additional zone (2) has a minimum latitude lying between 10° and 30°.

3. The space system according to claim 1 or 2, wherein the first threshold is 150° when the additional zone (2) has a minimum latitude lying between 30° and 50°.

4. The space system according to claim 1, wherein the second threshold is 90° when the additional zone (2) has a minimum latitude lying between -30° and -10°.

5. The space system according to claim 1 or 2, wherein the second threshold is 150° when the additional zone (2) has a minimum latitude lying between -50° and -30°.

6. The space system according to one of the preceding claims, wherein the inclination (8) of the plane (9) of the orbit in relation to the equatorial plane (10) lies between 60° and 65°.

7. The space system according to one of the preceding claims, wherein the inclination (8) of the plane (9) of the orbit in relation to the equatorial plane (10) is 63.5°.

8. The space system according to one of the preceding claims, wherein the eccentricity of the orbit is 0.25.

9. The space system according to one of claims 1 to 8, wherein the argument (12) of the perigee (13) lies between 280° and 290° for the coverage of a zone (1) of latitude above 55° combined with an additional zone (2) of latitudes below 55° and of longitudes lying within an interval of values having a length below the first threshold.

10. The space system according to one of claims 1 to 8, wherein the argument (12) of the perigee (13) lies between 275° and 285° for the coverage of a zone (1) of latitude above 55° combined with an additional zone (2) of latitudes below 55° and of longitudes lying within an interval of values having a length below the first threshold.

11. The space system according to one of claims 1 to 8, wherein the argument (12) of the perigee (13) lies between 280° and 300° for the coverage of a zone (1) of latitude above 55° combined with an additional zone (2) of latitudes below 55° and of longitudes lying within an interval of values having a length below the first threshold.

12. The space system according to one of the preceding claims, comprising at least one additional redundant satellite of a main satellite (4, 5), placed on the orbit of the corresponding main satellite (6, 7), with an anomaly offset between the additional satellite and the corresponding main satellite (4, 5).

13. The space system according to one of the preceding claims, comprising at least one additional satellite placed on elliptical orbit around the Earth (T), distinct from the two orbits (6, 7) of the two main satellites (4, 5) but verifying said same characteristics, the deviation between two satellites of the system being such that their right ascension deviation (15) of the ascending node (14) and their true anomaly deviation are 360° divided by the number of main satellites of the orbital system.
